# EUROPÄISCHE PATENTANMELDUNG

(11) **EP 2 182 204 A2**
(43) Veröffentlichungstag der Anmeldung: **05.05.2010**
(21) Anmeldenummer: 09010245.0
(22) Anmeldetag: 07.08.2009
(51) Int. Cl.: F03D 3/06, F03B 17/06

(54) **Rotationsvorrichtung mit Pendelrad**

(30) Priorität: 30.10.2008 DE 102008053849
(71) Anmelder: Aquapower GmbH, 55128 Mainz (DE)
(72) Erfinder: Schiel, Hans-Josef, 55481 Lindenschied (DE)
(74) Vertreter: Seitz, Ralf Hans Frank

(57) **Zusammenfassung**

Die vorliegende Erfindung betrifft eine Rotationsvorrichtung zur Verwendung in einem Fluid, die eine Hauptdreheinrichtung (3), die mit einer Zentralachse (M) der Rotationsvorrichtung fest verbunden ist, und mindestens zwei Drehflächen (1, 2, 3, 4, 5, 6) oder Rotorblätter hat, die drehbar um ihre Drehflächenachsen (1.1, 2.1) mit Abstand zu der Zentralachse (M) gekoppelt sind, mindestens eine Stelleinrichtung (10), die die Winkel oder Neigungen der Drehflächen (1, 2, 3, 4, 5, 6) zu einer Strömungsrichtung (S) des Fluids einstellt oder steuert, und eine Pendelradeinrichtung hat, die mit der Stelleinrichtung (10) gekoppelt ist, um die Zentralachse (M) herum frei drehbar angordnet ist, mit den Drehflächen (1, 2, 3, 4, 5, 6) gekoppelt ist und seine Drehbewegung auf die Drehflächen zum Einstellen der Winkel der Drehflächen zu der Strömungsrichtung (S) des Fluids überträgt, wobei die Pendelradeinrichtung mindestens ein Pendelrad (9, 10; 20) mit mindestens zwei vertikal übereinander angeordnete Pendelteilräder (9.1, 9.2, 21, 22, 23, 24) aufweist, wobei zwischen jeweils zwei benachbarten Pendelteilrädern eines Pendelrads mindestens ein Walzenrad oder Kegelzylinderrad (9.3, 9.4; 31, 32, 33, 34) vorgesehen ist, das frei drehbar um seine Achse (9.31, 9.41; 31.1, 32.1, 33.1, 34.1, 35.1, 36.1) herum angordnet ist, die senkrecht zu der Zentralachse (M) steht, und mit den anliegenden Pendelteilrädern derart gekoppelt ist, dass es eine Drehbewegung eines der anliegenden Pendelteilräder in eine Drehbewegung des anderen der anliegenden Pendelteilräder gegensinnig überträgt, wobei eines der Pendelteilräder von der Stelleinrichtung (10) gedreht wird, und dass jedes der Pendelteilräder mit einer der Drehflächen gekoppelt ist.

## Beschreibung

Die Erfindung betrifft eine Rotationsvorrichtung mit einem Pendelrad zur Verwendung in einem Fluid zum Zweck der Energiegewinnung aus der Strömungsbewegung eines Fluids oder zum Zweck der Umwandlung von Energie in eine Bewegung eines Fluids.

Mittels der Rotationsvorrichtung der Erfindung kann Energie aus einem strömenden Fluid, das ein Gas oder eine Flüssigkeit sein kann, z.B. Wind oder Wasser, durch Anordnen der Rotationsvorrichtung in dem Fluid gewonnen werden, wie es z.B. auch bei einer Turbine der Fall ist. Umgekehrt kann, indem die Rotationsvorrichtung durch einen extra Antrieb in Bewegung versetzt wird, eine Strömungsbewegung eines Fluids erzeugt werden.

In der Praxis sind Windkrafträder, Turbinen, Propeller oder Schiffsschrauben als Rotationsvorrichtungen bzw. Rotoren bekannt und im Einsatz. Zum Beispiel wird in der DE 103 24 455 A1 ein Rotationssegel als bekannte Rotationsvorrichtung beschrieben, in der zu der Rotation der Wirkflächen oder Blätter um einen Mittelpunkt eine zusätzliche Verdrehung einer Fläche um die eigene Achse durchgeführt wird. Zudem wird in der WO2007/082506 A2 eine Rotationsvorrichtung mit Drehgestell beschrieben, die ein Pendelrad oder Pendelsteuerrad zum synchronen Einstellen des Anstellwinkels von mehreren Rotorblättern zur Strömungsrichtung des Fluids auf ihrer Kreisbewegungsbahn um eine zentrale Mittenwelle hat, wobei das Pendelrad an der Mittenwelle frei drehbar um diese angeordnet ist. Der Inhalt der WO2007/082506 A2 wird hier durch Bezugnahme in seiner Gesamteinheit aufgenommen.

Aufgabe der Erfindung ist es eine Rotationsvorrichtung anzugeben, die einen hohen Wirkungsgrad bei geringem Steuerungsaufwand ermöglicht.

Diese Aufgabe wird durch die Rotationsvorrichtung der Erfindung gemäß Anspruch 1 gelöst. Demnach hat die Rotationsvorrichtung der Erfindung zur Verwendung in einem Fluid, um Energie aus der Strömungsbewegung eines Fluids zu gewinnen oder um Energie in eine Bewegung eines Fluids umzuwandeln, ein Hauptdreheinrichtung, die mit einer Zentralachse der Rotationsvorrichtung fest verbunden ist, mindestens zwei Drehflächen oder Rotorblätter, die drehbar um ihre Drehflächenachsen mit Abstand zu der Zentralachse derart mit der Hauptdreheinrichtung gekoppelt sind, dass die Hauptdreheinrichtung durch die Drehflächen eine Drehbewegung um die Zentralachse ausführen kann, wobei sich die Drehflächenachsen parallel zu der Zentralachse der Hauptdreheinrichtung erstrecken, mindestens einer Stelleinrichtung, die die Winkel oder Neigungen der Drehflächen zu einer Strömungsrichtung des Fluids einstellt oder steuert, und eine Pendelradeinrichtung, die mit der Stelleinrichtung gekoppelt ist, um die Zentralachse herum frei drehbar angordnet ist, mit den Drehflächen gekoppelt ist und seine Drehbewegung auf die Drehflächen zum Einstellen der Winkel der Drehflächen zu der Strömungsrichtung des Fluids überträgt. Weiterhin hat die Pendelradeinrichtung der Erfindung mindestens ein Pendelrad mit mindestens zwei vertikal übereinander angeordnete Pendelteilräder, wobei zwischen jeweils zwei benachbarten Pendelteilrädern eines Pendelrads mindestens ein Walzenrad oder Kegelzylinderrad vorgesehen ist, das frei drehbar um seine Achse herum angordnet ist, die senkrecht zu der Zentralachse steht, und mit den anliegenden Pendelteilrädern derart gekoppelt ist, dass es eine Drehbewegung eines der anliegenden Pendelteilräder in eine Drehbewegung des anderen der anliegenden Pendelteilräder gegensinnig überträgt, wobei eines der Pendelteilräder von der Stelleinrichtung gedreht wird, und dass jedes der Pendelteilräder mit einer der Drehflächen gekoppelt ist.

Durch die Verwendung von Pendelteilrädern mit dazwischen liegenden Kegelzylindern wird eine genaue Neigungseinstellung der angekoppelten Drehflächen zur Strömungsrichtung des Fluids mit einer aufwandsparenden Steuerung bewirkt, da nur eines der Pendelteilräder des Pendelrads von der Steuereinrichtung gedreht werden muß. Pro Pendelrad ist folglich nur eine Steuerkurve oder Steuernocke erforderlich, mit der dann zwei oder noch mehr Drehflächen synchron gesteuert werden können.

Bevorzugt hat das Pendelrad zwei Pendelteilräder und zwei Kegelzylinderräder, die zwischen den beiden Pendelteilrädern angeordnet sind.

Ein unteres Pendelteilrad des Pendelrads kann an seiner Unterseite mit der Stelleinrichtung zum Übertragen ihrer Stellbewegung auf das untere Pendelteilrad gekoppelt sein, wobei das untere Pendelteilrad an seinem Umfang mit einer Zahnung zum Eingriff in ein angekoppeltes Zwischenzahnrad versehen ist, das in ein Drehachsenzahnrad eingreift, und wobei das untere Pendelteilrad an seiner Oberseite eine ringförmig Vertiefung mit einem Boden hat, der mit einem Zahnkranz oder Zahnkranzsektor versehen ist und der in Richtung zu der Zentralachse hin gesehen schräg oder konisch ansteigt.

Ein oberes Pendelteilrad des Pendelrads kann dabei an seinem Umfang mit einer Zahnung zum Eingriff in ein weiteres, angekoppeltes Zwischenzahnrad versehen sein, das wiederum in ein Drehachsenzahnrad eingreift, wobei das obere Pendelteilrad an seiner Unterseite eine ringförmige Vertiefung mit einem Boden hat, der mit einem Zahnkranz oder Zahnkranzsektor versehen ist und in Richtung zu der Zentralachse hin gesehen schräg bzw. konisch abfällt.

Zudem kann ein weiteres, mittleres Pendelteilrad vorgesehen sein, das an seinem Umfang wiederum mit einer Zahnung zum Eingriff in ein angekoppeltes Zwischenzahnrad versehen ist, das wiederum in ein Drehflächenachsenzahnrad einer weiteren Drehfläche eingreift, wobei das mittlere Pendelteilrad an seiner Unterseite eine ringförmige Vertiefung mit einem Boden hat, der mit einem Zahnkranz oder Zahnkranzsektor versehen ist und der in Richtung zu der Zentralachse hin gesehen schräg oder konisch abfällt, und wobei das mittlere Pendelteilrad an seiner Oberseite eine weitere Vertiefung mit einem Boden hat, der mit einem weiteren, ringförmig sich erstreckenden Zahnkranz oder Zahnkranzsektor versehen ist und in Richtung zu der Zentralachse der Rotationsvorrichtung hin gesehen schräg oder konisch ansteigt.

Mit dem oberen, unteren und einem mittleren Pendelteilrad können Pendelräder modular aufgebaut werden, die mehrstöckig ausgelegt sind, z.B. drei-, vier- oder sechsstöckig, und zur synchronen Steuerung von entsprechend vielen Drehflächen durch eine Steuereinrichtung dienen.

Bevorzugt ist ein Pendelteilrad eines Pendelrads einer Pendelradeinrichtung mit mehreren übereinander angeordneten Pendelrädern an seiner Unterseite mit einer langgestreckten Pendelradhülse verbunden, die um die Zentralachse herum angeordnet ist. Mit diesem speziellen Pendelteilrad können mehrstöckige Pendelradeinrichtungen modular aufgebaut werden, die mehrere übereinander angeordneten Pendelräder mit jeweils mindestens zwei Pendelteilrädern enthalten, wobei jeweils ein Pendelrad durch jeweils eine Stelleinrichtung angesteuert wird. Z.B. kann damit eine Pendelradeinrichtung mit zwei Pendelrädern mit jeweils zwei Pendelteilrädern aufgebaut werden oder eine Pendelradeinrichtung mit einem Pendelrad, das zwei pendelteilräder hat, und einem weiteren Pendelrad, das drei Pendelteilräder hat, also eine unteres, ein oberes und ein zwischen diesen angeordnetes mittleres Pendelteilrad.

Die Pendelradhülse hat längliche Radialöffnungen, durch die sich Achsen bzw. von Kegelradzylinderzahnrädern erstrecken, wobei eine Länge der Radialöffnungen mindestens der maximalen Drehverstellung eines benachbarten Pendelteilrads entspricht.

Bevorzugt ist ein Neigungswinkel der Drehflächen in einem Bereich von - 25 ° bis 25 ° zur Strömungsrichtung (S) des Fluids, um einen Auftriebsbetrieb der Rotationsvorrichtung einrichten zu können.

Die Rotationsvorrichtung der Erfindung ist bevorzugt derart aufgebaut, dass eine Drehfläche über 0 °- 180 ° der Drehbewegung der Hauptdreheinrichtung um die Zentralachse einen Winkel zur Strömungsrichtung des Fluids hat und dass die Drehfläche über 180 ° bis 360 ° der Drehbewegung der Hauptdreheinrichtung um die Zentralachse einen Winkel zur Strömungsrichtung (S) des Fluids hat, der ein umgekehrtes Vorzeichen zu dem Winkel in den 0 ° bis 180 ° hat, wobei die Winkel gleichsinnig wirkende Drehmomente bereitstellen. Dadurch werden sich gleichsinnig addierende Drehmomente der Rotationsvorrichtung für eine entsprechend hohe Energieausbeute sichergestellt.

Die Stelleinrichtung kann einen Steuernocken oder eine Steuerkurve, der oder die fest mit der Zentralachse der Hauptdreheinrichtung gekoppelt ist, und einen Antrieb haben, der mit der Steuernocke bzw. der Steuerkurve und einem Pendelteilrad der Pendelradeinrichtung gekoppelt ist, um die Bewegung des Steuernockens oder der Steuerkurve in eine Verstellbewegung der Drehflächen zum Einstellen der Neigungen der Drehflächen zur Strömungsrichtung des Fluids umsetzt. Durch diesen Aufbau wird eine zuverlässige und genaue Einstellung der Lage der Drehflächen erreicht.

In Alternative kann die Stelleinrichtung einen elektrischen oder elektromotorischen Antrieb haben, der wieder nur mit einem der Pendelteilräder der Pendelradeinrichtung gekoppelt ist und in Abhängigkeit von der Drehposition der Hauptdreheinrichtung den Winkel bzw. die Neigung der Drehflächen zu der Strömungsrichtung des Fluids einstellt.

Die Stelleinrichtung kann auch eine neutrale Stellung oder einen neutralen Winkel der Drehfläche(n) bezüglich der Strömungsrichtung einstellen, in der die jeweilige Drehfläche auf die Hauptdreheinrichtung der Rotationsvorrichtung der Erfindung kein Drehmoment ausübt. Damit kann verhindert werden, dass die Rotationsvorrichtung durch eine zu starke Strömung oder stoßartige Strömung beschädigt wird. Bevorzugt beträgt der Stellwinkel der Drehfläche in der neutralen Stellung 0 °.

Ein bevorzugtes Merkmal der Erfindung ist die Pendelbewegung, die die Drehflächen in der einen Hälfte ihrer Kreisbewegung um die Zentralachse in einen positiven Anstellwinkel und in der anderen Hälfte der Kreisbewegung in einen negativen Anstellwinkel der jeweiligen Drehfläche zur Strömungsrichtung des Fluids bringt.

Die Rotationsvorrichtung der vorliegenden Erfindung kann z.B. als Windkraftrad, als Turbine, als Propeller oder Schiffsschraube verwendet werden.

Weitere vorteilhafte Weiterbildungen der Erfindung sind den Unteransprüchen zu entnehmen. Weiter Vorteile, vorteilhafte Weiterbildungen und Anwendungsmöglichkeiten der vorliegenden Erfindung sind der nachfolgenden detaillierten Beschreibung von beispielhaften, bevorzugten Ausbildungsformen in Verbindung mit den Zeichnungen zu entnehmen. Es zeigen:
- Fig. 1: eine seitliche Schnittansicht einer beispielhaften und bevorzugten Rotationsvorrichtung gemäß einer ersten Ausführungsform der Erfindung zur synchronen Steuerung von zwei Drehflächen in der Seitenansicht;
- Fig. 2: eine Detailansicht der Fig. 1, die eine Pendelradeinrichtung mit zwei Pendelteilrädern zum Einstellen von zwei Drehflächen zeigt;
- Fig. 3: eine Detailansicht, die eine Stelleinrichtung für die Drehflächen der ersten Ausführungsform von Fig. 1 zeigt;
- Fig. 4: eine Ansicht der Stelleinrichtung von Fig. 3 in Richtung des Pfeiles IV in Fig. 3 gesehen;
- Fig. 5: eine weitere Detailansicht, die eine alternative Stelleinrichtung zur Ausführungsform von Fig. 3 zeigt;
- Fig. 6: eine Ansicht der Stelleinrichtung von Fig. 5 in Richtung des Pfeils VI in Fig. 5 gesehen;
- Fig. 7: eine seitliche Schnittansicht einer weiteren Pendelradeinrichtung zur Verwendung in einer Rotationsvorrichtung gemäß einer zweiten bevorzugten Ausführungsform der Erfindung mit vier synchron gesteuerten Drehflächen oder Flügeln;
- Fig. 8: eine schematische Draufsicht auf eine Pendelradeinrichtung zur Verwendung in einer Rotationsvorrichtung gemäß einer beispielhaften, dritten Ausführungsform der Erfindung mit sechs, synchron gesteuerten Drehflächen oder Flügeln; und
- Fig. 9: eine seitliche Schnittansicht einer weiteren Pendelradeinrichtung zur Verwendung in einer Rotationsvorrichtung gemäß einer vierten bevorzugten Ausführungsform der Erfindung mit vier synchron gesteuerten Drehflächen oder Flügeln.

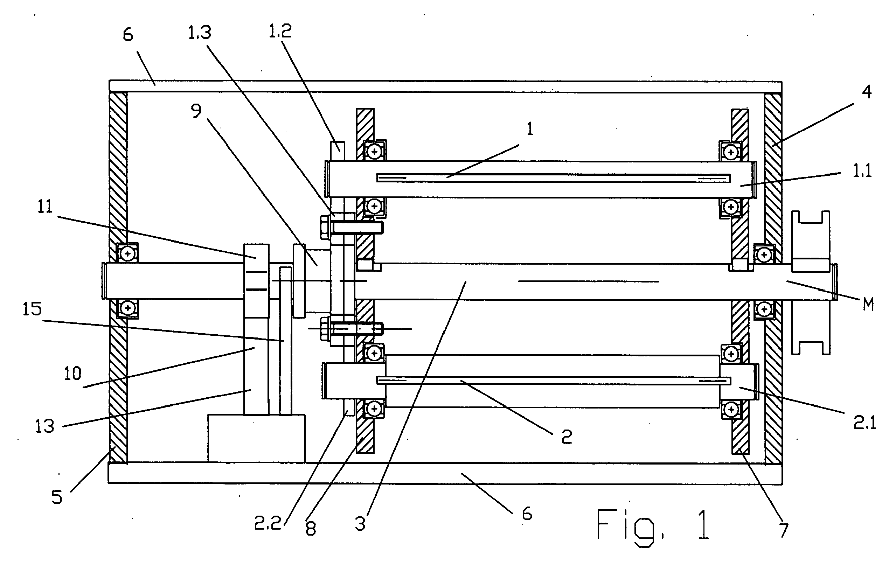

In Fig. 1 ist eine seitliche Schnittansicht einer beispielhaften und bevorzugten Rotationsvorrichtung gemäß einer ersten Ausführungsform der Erfindung zur synchronen Steuerung von zwei Drehflächen 1, 2 bzw. Flügeln in der Seitenansicht gezeigt. Eine Hauptdreheinrichtung 3 bzw. ein Hauptdrehkörper der Rotationsvorrichtung ist zwischen bzw. in zwei- oder mehreren stationären, miteinander durch Stege 6 verbundene, ortsfeste Stützwangen 4 und 5 oder Stützträgern drehbar um eine Zentralachse M gelagert. Die Hauptdreheinrichtung 3 wird seitlich durch eine oder mehrere kreisflächige, zueinander beabstandete Rotationswangen 7 und 8 oder Rotationsträger begrenzt, die mit der Zentralachse M starr verbunden sind. In den Rotationswangen 7 und 8 sind eine Drehflächenachse 1.1 der Drehfläche 1 und eine Drehflächenachse 2.1 der Drehfläche 2 drehbar gelagert. Die Drehflächenachsen 1.1 und 2.1 sind parallel und mit Abstand zu der Zentralachse M angeordnet und befinden sich eher an den Rändern der scheibenförmigen Rotationswangen 7 und 8. Die Zentralachse M ist z.B. mit einem elektrischen Generator zum Erzeugen von elektrischem Strom gekoppelt.

Auf den Verlängerungen der Drehflächenachsen 1.1 und 2.1 sitzt ein Drehachsenzahnrad 1.2 bzw. eine Drehachsenzahnrad 2.2, die starr oder fest mit der zugeordneten Drehachse verbunden sind. Als Funktionsbeispiel soll hier in der ersten Ausführungsform der Erfindung beispielhaft ein Antrieb mit Zahnrädern dienen. Die Drehachsenzahnräder 1.2 und 2.2 sind jeweils über ein Zwischenzahnrad 1.3 mit einem Pendelrad 9 als Pendelradeinrichtung gekoppelt, das frei drehbar um die Zentralachse M an dieser angeordnet ist und eine Relativbewegung zu der Zentralachse M ausführen kann. Das Pendelrad 9 auf der Zentralachse M ist somit nicht mit der Zentralachse M in radialer Richtung starr verbunden.

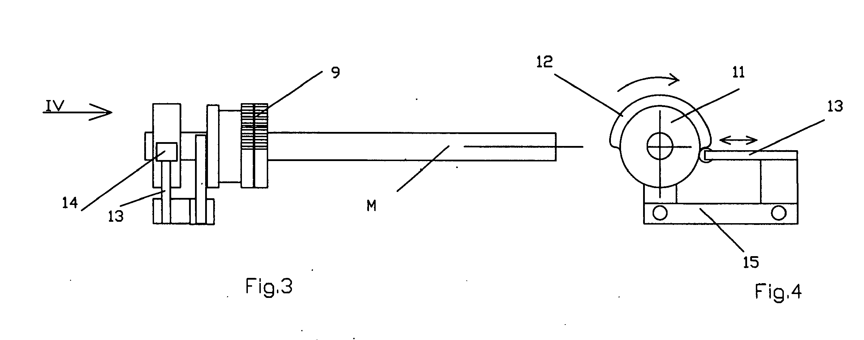

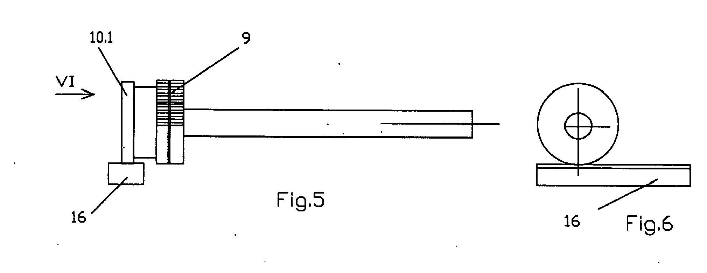

Eine Verstellung, Drehung oder radiale Lage des Pendelrads 9 wird durch eine Stelleinrichtung 10 oder Steuereinrichtung der Rotationsvorrichtung bestimmt. Die Stelleinrichtung 10 ist über das Pendelrad 9, die Zwischenzahnräder 1.3 und Drehachsenzahnräder 1.1 bzw. 2.1 als Antrieb mit den Drehflächen 1 bzw. 2 gekoppelt, um deren Winkelstellung oder Neigung bezüglich einer Strömungsrichtung S des Fluids einstellen zu können. Diese Verstellbewegung der Drehflächen 1 und 2 kann durch eine Pendelbewegung bzw. Hin-und-Her-Bewegung des Pendelrads 9 durch z.B. ein mechanisches Kurvenelement (vgl. Fig. 3 und Fig. 4) oder durch einen elektrischen Antrieb (vgl. Fig. 5 und 6) erzeugt werden.

In der ersten Ausführungsform hat die Stelleinrichtung 10 eine Steuerkurve 11 mit einem Steuernocken 12, wobei die Steuerkurve 11 starr mit der Zentralachse M verbunden ist. Weiterhin hat die Stelleinrichtung 10 eine hin-und-her bewegbare Pendelstange 13 mit einer Pendelrolle 14, die die Steuerkurve 11 abtastet. Der Steuernocken 12 stellt einen Vorsprung dar, der einem Drehabschnitt von 180 ° entspricht. Die Bewegung der Steuerkurve 11 wird über die Pendelstange 13 und ein Schubgestänge 15 auf das Pendelrad 9 übertragen, das die Winkelauslenkungsbewegung der Drehflächen 1 und 2 synchron steuert.

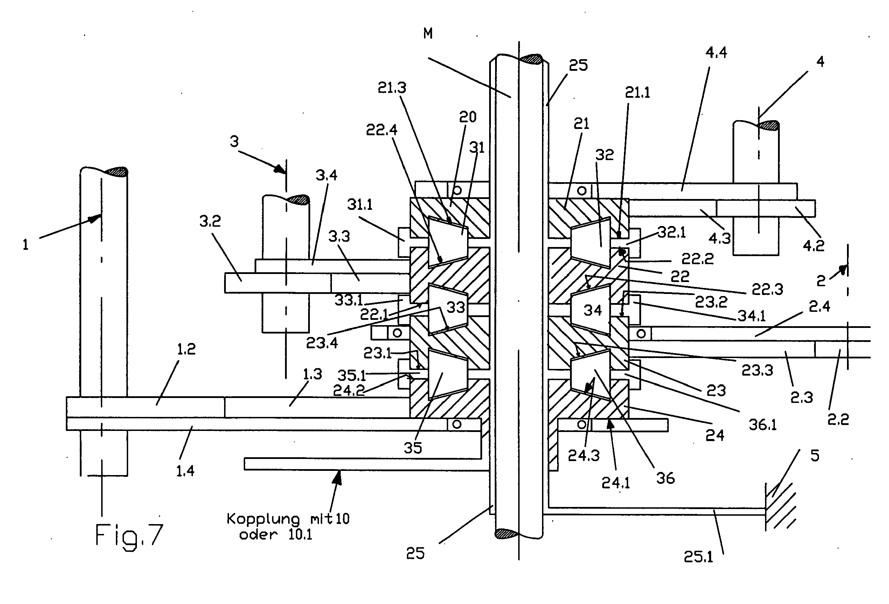

In Fig. 6 und 7 ist eine alternative Stelleinrichtung 10.1 gezeigt, die mit einem elektrischen oder elektromotorischen Antrieb 16 bzw. Elektromotor arbeitet, der mit dem Pendelrad 9 gekoppelt ist.

Verfolgt man eine vollständige Kreisbewegung der ersten Drehfläche 1, beträgt der Winkel der ersten Drehfläche 1 in einem ersten und zweiten Quadranten der Kreisbewegung der Drehfläche 1 oder der Drehbewegung der Rotationsvorrichtung um die Zentralachse M, also zwischen 0 ° und 180 °, z.B. konstant bevorzugt - 10 °. Beim Durchgang der Drehfläche 1 durch einen Wendepunkt bei 180 ° der Kreisbewegung wechselt der Anstellwinkel der ersten Drehfläche auf z.B. + 10 ° zu der Strömungsrichtung S. Dieser positive Winkel wird dann bevorzugt konstant in dem dritten und vierten Quadranten der Kreisbewegung, also zwischen 180 ° und 360 ° (= 0 °) beibehalten. Beim Durchgang durch 0 ° wechselt der Winkel der ersten Drehfläche dann wieder auf - 10 °. Eine entsprechende Winkeleinstellung oder Neigung des Winkels der Drehfläche 2 wird um 180 ° versetzt zur Drehfläche 1 synchron über das Pendelrad 9 durchgeführt. Die beiden Drehflächen 1 und 2 erzeugen somit ein gleichmäßiges, positives Drehmoment im wesentlichen entlang Ihrer Kreisbewegung um die Zentralachse M mit der Ausnahme der neutralen Stellungen oder Wendepunkte bei 0 ° und 180 °, in denen das Drehmoment verschwindet bzw. null ist.

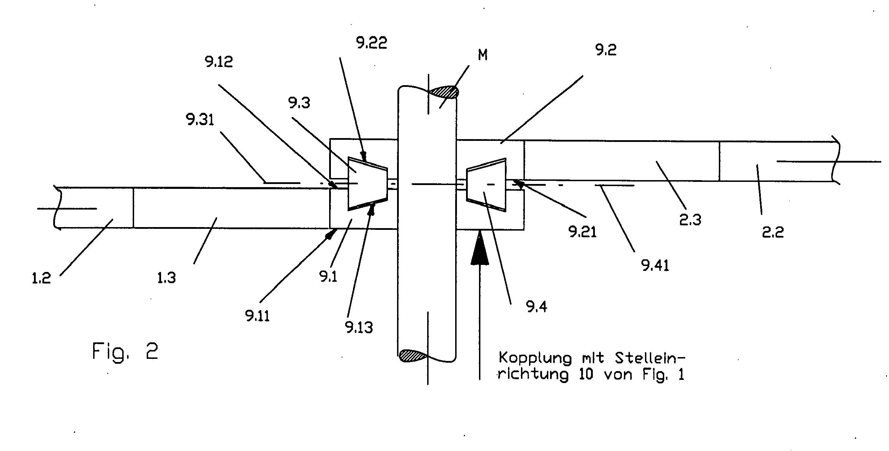

Die schematische Detailansicht von Fig. 2 zeigt herausgelöst das Pendelrad 9 als eine Pendelradeinrichtung, das zwei Pendelteilräder 9.1, 9.2 und bevorzugt zwei Kegelzylinderräder 9.3, 9.4, Walzen oder Walzenkörper hat, die zwischen den Pendelteilrädern 9.1, 9.2 angeordnet sind und z.B. in diese per Zahnung eingreifen.

Genauer ist das untere Pendelteilrad 9.1 an seiner Unterseite 9.11 mit der Stelleinrichtung 10 oder 10.1 gekoppelt oder an diese angeflanscht, die ihre Stellbewegung auf das untere Pendelteilrad 9.1 überträgt. Das untere Pendelteilrad 9.1 ist an seinem Umfang mit einer Zahnung zum Eingriff in das angekoppelte Zwischenzahnrad 1.3 versehen, das in das Drehachsenzahnrad 1.2 eingreift. An seiner Oberseite 9.12 hat das untere Pendelteilrad 9.12 eine ringförmige Vertiefung mit einem Boden, der in Richtung zu der Zentralachse M hin gesehen schräg bzw. konisch ansteigt und mit einem ringförmigen Zahnkranz 9.13 oder Zahnkranzsektor versehen ist.

Das obere Pendelteilrad 9.2 ist an seinem Umfang mit einer Zahnung zum Eingriff in das weitere, angekoppelte Zwischenzahnrad 1.3 versehen, das wiederum in das Drehachsenzahnrad 2.2 eingreift. An seiner Unterseite 9.21 hat das untere Pendelteilrad 9.12 eine ringförmige Vertiefung mit einem Boden, der in Richtung zu der Zentralachse M hin gesehen schräg bzw. konisch abfällt und mit einem ringförmigen Zahnkranz 9.22 oder Zahnkranzsektor versehen ist.

Die beiden Pendelteilräder 9.1 und 9.2 sind in der Vertikalen übereinander derart angeordnet, dass sich die Zahnkränze 9.22 und 9.13 ausgerichtet gegenüberstehen. Die beiden Kegelzylinderzahnräder 9.3 und 9.4 sind zwischen den beiden Pendelteilrädern 9.1 und 9.2 in den Vertiefungen angeordnet und in Eingriff mit den Zahnkränzen 9.13 und 9.22. Jedes der Kegelzylinderzahnräder 9.3 und 9.4 ist frei drehbar auf einer Achse 9.31 bzw. 9.41 gelagert, die in Fig. 2 als strichpunktierte Linie angedeutet sind und ortsfest mit z.B. einer der Stützwangen 5 und 4 oder mit einem der Stege 6 der Rotationsvorrichtung gekoppelt oder verbunden sind.

Wird das untere Pendelteilrad 9.1 von der Stelleinrichtung 10 z.B. um einen Winkel von +10 ° verdreht, führt diese Drehbewegung des unteren Pendelteilrads 9.1 zu einer entsprechenden Drehbewegung des Zwischenzahnrads 1.3, des Drehachsenzahnrads 1.2 und auch der Drehflächenachse 1.1 und damit auch zu einer zugehörigen Neigungsverstellung der Drehfläche 1 auf + 10 °. Dreht sich das untere Pendelteilrad 9.1, wird diese Drehung über die beiden Kegelzylinderzahnräder 9.3 und 9.4 auf das obere Pendelteilrad 9.2 des Pendelrads 9 mit dem entgegengesetzten Drehsinn derart übertragen, dass das obere Pendelteilrad 9.2 um z.B. einen Winkel von -10 ° gedreht wird. Die Drehbewegung des oberen Pendelteilrads 9.2 führt dann zu einer entsprechenden Drehbewegung des Zwischenzahnrads 1.3, des Drehachsenzahnrads 2.2 und auch der Drehflächenachse 2.1 und damit auch zu einer zugehörigen Neigungsverstellung der zweiten Drehfläche 2 auf - 10 ° gegenüber der Vertikalen oder neutralen Stellung der Drehfläche 2. Damit wird die erste Drehfläche 1 in dem ersten und zweiten Quadranten der Kreisbewegung auf + 10° eingestellt, während die gegenüberliegende, zweite Drehfläche 2 im dritten und vierten Quadranten der Kreisbewegung auf - 10 ° eingestellt wird. Weiterhin wird die erste Drehfläche 1 in dem dritten und vierten Quadranten der Kreisbewegung analog auf - 10° eingestellt, während die gegenüberliegende, zweite Drehfläche 2 nun im ersten und zweiten Quadranten der Kreisbewegung auf + 10 ° eingestellt wird. Mit Hilfe des Pendelrads 9 können somit die beiden Drehflächen 1 und 2 synchron mittels einer einzigen Stelleinrichtung 10 oder 10.1 gesteuert werden.

Fig. 7 zeigt eine Teilansicht einer weiteren Ausführungsform der Rotationsvorrichtung der Erfindung, die ein Pendelrad 20 als Pendelradeinrichtung hat, das zur synchronen Ansteuerung von vier einstellbaren Drehflächen oder Flügeln ausgelegt ist.

Genauer ist das Pendelrad 20 vierstöckig aufgebaut, also mit vier übereinander, um die Zentralachse M herum angeordneten Pendelteilrädern 21, 22, 23 und 24. Zwischen den Pendelteilrädern 21 und 22 sind analog zu der Ausführungsform von Fig. 2 mit dem doppelstöckigen Pendelrad 9 zwei sich gegenüber angeordnete Kegelzylinderzahnräder zwischen jeweils zwei Pendelteilrädern vorgesehen. Weiterhin ist zwischen der Zentralachse M und den ringförmigen Pendelteilrädern eine ortsfeste Hülse 25 vorgesehen, die über einen Steg 25.1 oder mehrere Stege mit dem ortsfesten Wangen 4, 5 oder den ortsfesten Stegen 6 der Rotationsvorrichtung verbunden ist. Die Zentralachse M ist innerhalb der Hülse 25 frei drehbar, während die Pendelteilräder 21, 22, 23 und 24 frei drehbar um die Hülse 25 und damit auch um die Zentralachse M mittels z.B. einer Gleitlagerung oder Kugellagerung angeordnet sind, um eine Pendelbewegung synchron zueinander ausführen zu können, die wieder von einer einzigen Stelleinrichtung 10 oder 10.1 (vgl. Fig. 1 bis 6) gesteuert wird. Die Stelleinrichtung 10 oder 10.1 ist hierzu mit der Unterseite 24.1 des Pendelteilrads 24 des Pendelrads 20 gekoppelt.

Das unterste, erste Pendelteilrad 24 ist weiterhin an seinem Umfang mit einer Zahnung zum Eingriff in das angekoppelte Zwischenzahnrad 1.3 versehen, das in das Drehachsenzahnrad 1.2 der Drehfläche 1 (strich-punktiert angedeutet) eingreift. Das Zwischenzahnrad 1.3 und Drehachsenzahnrad 1.2 ist auf einem Träger 1.4 angeordnet. An seiner Oberseite 24.2 hat das Pendelteilrad 24 eine ringförmig Vertiefung mit einem Boden, der mit einem Zahnkranz 24.3 oder Zahnkranzsektor versehen ist und in Richtung zu der Zentralachse M hin gesehen schräg bzw. konisch ansteigt.

Das über dem ersten Pendelteilrad 24 angeordnete, zweite Pendelteilrad 23 oder mittlere Pendelteilrad 23 ist an seinem Umfang wiederum mit einer Zahnung zum Eingriff in das zweite, angekoppelte Zwischenzahnrad 2.3 versehen, das wiederum in das Drehflächenachsenzahnrad 2.2 der zweiten Drehfläche 2 eingreift. Ein Träger 2.4 trägt wiederum diese beiden Zahnräder. An seiner Unterseite 23.1 hat das zweite Pendelteilrad 23 eine ringförmige Vertiefung mit einem Boden, der mit einem ringförmigen Zahnkranz 23.3 oder Zahnkranzsektor versehen ist und in Richtung zu der Zentralachse M hin gesehen schräg bzw. konisch abfällt. An seiner Oberseite 23.2 hat das zweite Pendelteilrad 23 eine weitere ringförmige Vertiefung mit einem Boden, der mit einem weiteren, ringförmigen Zahnkranz 23.3 oder Zahnkranzsektor versehen ist und der in Richtung zu der Zentralachse M hin gesehen schräg bzw. konisch ansteigt.

Die beiden Pendelteilräder 23 und 24 sind in der Vertikalen übereinander derart angeordnet, dass sich die Zahnkränze 23.3 und 24.3 gegenüberstehen und zueinander ausgerichtet sind. Die beiden Kegelzylinderzahnräder 35 und 36 sind zwischen den beiden Pendelteilrädern 23 und 24 in den beiden Vertiefungen angeordnet und in Eingriff mit den Zahnkränzen 23.3 und 24.3. Jedes der Kegelzylinderzahnräder 35 und 36 ist frei drehbar auf einer zugeordneten Achse 35.1 bzw. 36.1 gelagert, die mit der Hülse 25 oder in Alternative direkt mit einer ortsfesten Wange 4 oder 5 der Rotationsvorrichtung gekoppelt sind.

Das über dem zweiten Pendelteilrad 23 angeordnete, dritte Pendelteilrad 22 ist an seinem Umfang wiederum mit einer Zahnung zum Eingriff in ein drittes, angekoppeltes Zwischenzahnrad 3.3 versehen, das in ein Drehflächenachsenzahnrad 3.2 einer dritten Drehfläche 3 eingreift. Ein Träger 3.4 ist wieder für diese beiden Zahnräder vorgesehen. An seiner Unterseite 22.1 hat das dritte Pendelteilrad 22 eine ringförmige Vertiefung mit einem Boden, der einen ringförmigen Zahnkranz 22.3 oder Zahnkranzsektor hat und der in Richtung zu der Zentralachse M hin gesehen schräg bzw. konisch abfällt. An seiner Oberseite 22.2 hat das dritte Pendelteilrad 22 eine weitere ringförmige Vertiefung mit einem Boden, der einen weiteren, ringförmig sich erstreckenden Zahnkranz 22.4 oder Zahnkranzsektor hat und der in Richtung zu der Zentralachse M hin gesehen schräg bzw. konisch ansteigt.

Die beiden Pendelteilräder 22 und 23 sind in der Vertikalen übereinander derart angeordnet, dass sich die Zahnkränze 23.4 und 22.3 gegenüberstehen und zueinander ausgerichtet sind. Die beiden Kegelzylinderzahnräder 33 und 34 sind zwischen den beiden Pendelteilrädern 22 und 23 in den Vertiefungen angeordnet und in Eingriff mit den Zahnkränzen 22.3 und 23.4. Jedes der Kegelzylinderzahnräder 33 und 34 ist frei drehbar auf einer zugeordneten Achse 33.1 bzw. 34.1 gelagert, die mit der Hülse 25 oder in Alternative direkt mit einer ortsfesten Wange 4 oder 5 der Rotationsvorrichtung gekoppelt sind.

Das über dem dritten Pendelteilrad 22 angeordnete, oberste, vierte Pendelteilrad 21 des Pendelrads 20 ist an seinem Umfang wiederum mit einer Zahnung zum Eingriff in ein viertes, angekoppeltes Zwischenzahnrad 4.3 versehen, das in ein Drehflächenachsenzahnrad 4.2 einer vierten Drehfläche 4 eingreift, die in Fig. 7 strich-punktiert angedeutet ist. An seiner Unterseite 21.1 hat das oberste, vierte Pendelteilrad 21 eine ringförmige Vertiefung mit einem Boden, der mit einem ringförmig ausgebildeten Zahnkranz 21.3 oder Zahnkranzsektor versehen ist und der in Richtung zu der Zentralachse M hin gesehen schräg bzw. konisch abfällt.

Die beiden Pendelteilräder 22 und 21 sind in der Vertikalen übereinander derart angeordnet, dass sich die Zahnkränze 22.4 und 21.3 gegenüberstehen und zueinander ausgerichtet sind. Die beiden Kegelzylinderzahnräder 31 und 32 sind zwischen den beiden Pendelteilrädern 22 und 21 in den Vertiefungen angeordnet und in Eingriff mit den Zahnkränzen 22.4 und 21.3. Jedes der Kegelzylinderzahnräder 31 und 32 ist frei drehbar auf einer zugeordneten Achse 31.1 bzw. 32.1 gelagert, die mit der Hülse 25 oder in Alternative direkt mit einer ortsfesten Wange 4 oder 5 der Rotationsvorrichtung gekoppelt sind.

Wird das unterste, erste Pendelteilrad 24 des Pendelrads 20 von der Stelleinrichtung 10 z.B. um einen Winkel von +10 ° verdreht, führt diese Drehbewegung des ersten Pendelteilrads 24 zu einer entsprechenden Drehbewegung des Zwischenzahnrads 1.3, des Drehachsenzahnrads 1.2 und auch der Drehflächenachse 1.1 und damit auch zu einer zugehörigen Neigungsverstellung der Drehfläche 1 auf + 10 °. Dreht sich das erste Pendelteilrad 24, wird diese Drehung über die beiden Kegelzylinderzahnräder 35 und 36 auf das zweite Pendelteilrad 23 des Pendelrads 20 mit dem entgegengesetzten Drehsinn derart übertragen, dass das zweite Pendelteilrad 23 um z.B. einen Winkel von -10 ° synchron gedreht wird. Die Drehbewegung des zweiten Pendelteilrads 23 führt dann zu einer entsprechenden Drehbewegung des Zwischenzahnrads 2.3, des Drehachsenzahnrads 2.2 und auch der Drehflächenachse 2.1 und damit auch zu einer zugehörigen Neigungsverstellung der zweiten Drehfläche 2 auf - 10 ° gegenüber der Vertikalen oder neutralen Stellung der Drehfläche 2. Damit wird die erste Drehfläche 1 in dem ersten und zweiten Quadranten der Kreisbewegung auf + 10° eingestellt, während die gegenüberliegende, zweite Drehfläche 2 im dritten und vierten Quadranten der Kreisbewegung auf - 10 ° zur Strömungsrichtung S des Fluids eingestellt wird.

Dreht sich das zweite, mittlere Pendelteilrad 23, wird diese Drehung über die beiden Kegelzylinderzahnräder 33 und 34 auf das dritte, mittlere Pendelteilrad 22 des Pendelrads 20 wiederum mit dem entgegengesetzten Drehsinn zum zweiten Pendelteilrad 23 derart übertragen, dass das dritte Pendelteilrad 22 um z.B. einen Winkel von +10 ° synchron gedreht wird. Die Drehbewegung des dritten Pendelteilrads 22 führt dann zu einer entsprechenden Drehbewegung des Zwischenzahnrads 3.3, des Drehachsenzahnrads 3.2 und auch der Drehflächenachse 3.1 und damit auch zu einer zugehörigen Neigungsverstellung der dritten Drehfläche 3 auf + 10 ° gegenüber der Vertikalen oder neutralen Stellung der Drehfläche 3. Damit wird die dritte Drehfläche 3 in dem ersten und zweiten Quadranten der Kreisbewegung auf + 10° eingestellt.

Da sich das dritte, mittlere Pendelteilrad 22 dreht, wird diese Drehung über die beiden Kegelzylinderzahnräder 31 und 32 auf das vierte, oberste Pendelteilrad 21 des Pendelrads 20 wiederum mit dem entgegengesetzten Drehsinn zum dritte Pendelteilrad 22 derart übertragen, dass das vierte Pendelteilrad 21 um z.B. einen Winkel von -10 ° synchron gedreht wird. Die Drehbewegung des vierten Pendelteilrads 22 führt dann zu einer entsprechenden Drehbewegung des Zwischenzahnrads 4.3, des Drehachsenzahnrads 4.2 und auch der Drehflächenachse 4.1 und damit auch zu einer zugehörigen Neigungsverstellung der vierten Drehfläche 4 auf - 10 ° gegenüber der Vertikalen oder neutralen Stellung der Drehfläche 3. Damit wird die vierte Drehfläche 4 in dem dritten und vierten Quadranten der Kreisbewegung auf - 10° eingestellt.

Da die erste Drehfläche 1 und die dritte Drehfläche 3 in dem dritten und vierten Quadranten der Kreisbewegung analog auf - 10° eingestellt werden, während die entsprechend gegenüberliegende, zweite Drehfläche 2 und vierte Drehfläche 4 nun im ersten und zweiten Quadranten der Kreisbewegung auf + 10 ° eingestellt wird, können insgesamt sich positiv addierende Drehmomente über die gesamte Kreisbewegung der Drehflächen gesehen erreicht werden. Mit Hilfe des Pendelrads 20 können somit die vier identisch aufgebauten Drehflächen 1, 2, 3 und 4 synchron mittels einer einzigen Stelleinrichtung 10 derart gesteuert werden, dass ihre Neigungen zu der Strömungsrichtung S des Fluids ein bevorzugt gleichförmiges, großes Gesamtdrehmoment ergeben, was wiederum einen hohen Wirkungsgrad ergibt.

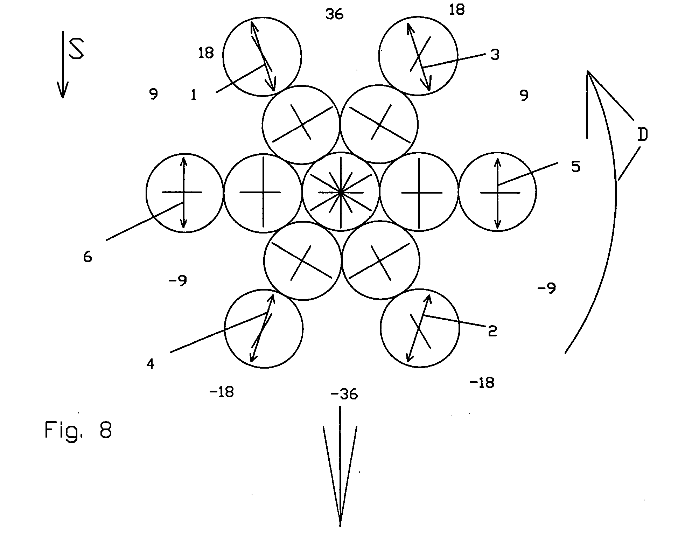

In Fig. 8 ist schematische eine beispielhafte Rotationsvorrichtung gemäß einer dritten Ausführungsform der Erfindung gezeigt, die ein sechsstöckiges Pendelrad 50 mit insgesamt sechs Pendelteilrädern, entsprechend sechs Zwischenrädern und sechs Drehachsenzahnrädern für entsprechend sechs Drehflächen 1, 2, 3, 4, 5, 6 aufweist, deren Anstellwinkel synchron wieder von einer einzigen Stelleinrichtung 10 oder 10.1 gesteuert werden. In Fig. 6 sind die Drehflächen 1, 2, 3, 4, 5, 6 durch Doppelpfeile angedeutet, wobei Fig. 8 eine Momentanstellung der Rotationsvorrichtung zeigt, bei der sich die Drehflächen 1 und 3 in einem Neigungswinkel von + 18 ° zur Strömungsrichtung S des Fluids im ersten und zweiten Quadranten der Kreisbewegung der Rotationsvorrichtung befinden, während sich die Drehflächen 4 und 2 gerade in einem Neigungswinkel von - 18 ° zur Strömungsrichtung S des Fluids im dritten und vierten Quadranten der Kreisbewegung der Rotationsvorrichtung befinden und die Drehflächen 5 und 6 in der neutralen Stellung bei 0 ° bzw. 180° der Kreisbewegung sind. Der gebogene Pfeil D gibt den Drehsinn oder die Drehrichtung der Rotationvorrichtung an. Wie zu sehen ist addieren sich die erzeugten Drehmomente zu einem Gesamtdrehmoment mit einem entsprechend hohen Wirkungsgrad.

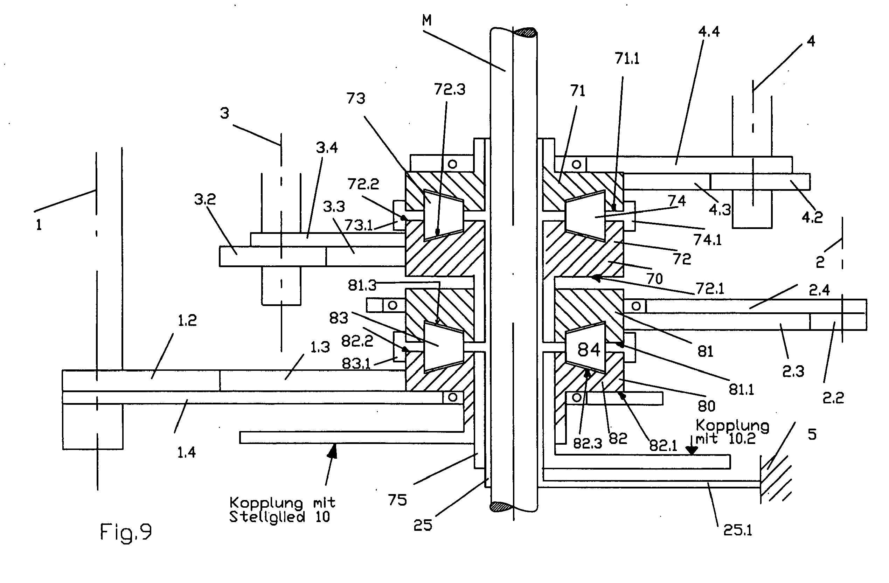

Die schematische Detailansicht von Fig. 9 zeigt herausgelöst eine Pendelradeinrichtung, die zwei verschachtelt angeordnete Pendelräder 70 und 80 mit jeweils zwei Pendelteilrädern 71 und 72 bzw. 81 und 82 hat, zwischen denen wiederum jeweils zwei Kegelzylinderräder 73 und 74, Walzen oder Walzenkörper, bzw. 83 und 84 angeordnet sind und z.B. in diese per Zahnung eingreifen.

Genauer ist das untere Pendelteilrad 82 des Pendelrads 80 an seiner Unterseite 82.1 mit der Stelleinrichtung 10 oder 10.1 gekoppelt oder an diese angeflanscht, die ihre Stellbewegung auf das untere Pendelteilrad 82 überträgt. Das untere Pendelteilrad 82 ist an seinem Umfang mit einer Zahnung zum Eingriff in das angekoppelte Zwischenzahnrad 1.3 versehen, das in das Drehachsenzahnrad 1.2 eingreift, welches wiederum mit der Drehfläche 1 gekoppelt ist. An seiner Oberseite 82.2 hat das untere Pendelteilrad 82 eine ringförmige Vertiefung mit einem Boden, der als ringförmiger Zahnkranz 82.3 oder Zahnkranzsektor aufgebaut ist und zu der Zentralachse M hin gesehen schräg bzw. konisch ansteigt. Ein Träger 1.4 ist vorgesehen, der das Zwischenzahnrad 1.3 und das Drehachsenzahnrad 1.2 hält und an dem unteren Pendelteilrad 82 gelagert ist.

Das obere Pendelteilrad 81 des Pendelrads 80 ist an seinem Umfang mit seiner Zahnung im Eingriff in das weitere, angekoppelte Zwischenzahnrad 2.3 versehen, das wiederum in das Drehachsenzahnrad 2.2 eingreift, welches mit der Drehfläche 2 gekoppelt ist. An seiner Unterseite 81.1 hat das obere Pendelteilrad 81 eine ringförmig Vertiefung mit einem Boden, der ringförmiger Zahnkranz 81.3 oder Zahnkranzsektor, aufgebaut ist und in Richtung zu der Zentralachse M hin gesehen schräg bzw. konisch abfällt. Ein Träger 2.4 ist vorgesehen, der das Zwischenzahnrad 2.3 und das Drehachsenzahnrad 2.2 hält und an dem oberen Pendelteilrad 81 gelagert ist.

Die beiden Pendelteilräder 81 und 82 sind in der Vertikalen übereinander derart angeordnet, dass sich die Zahnkränze 81.3 und 82.3 ausgerichtet gegenüberstehen. Die beiden Kegelzylinderzahnräder 83 und 84 sind zwischen den beiden Pendelteilrädern 81 und 82 in den Vertiefungen angeordnet und in Eingriff mit den Zahnkränzen 81.3 und 82.3. Jedes der Kegelzylinderzahnräder 83 und 84 ist frei drehbar auf einer zugehörigen Achse 83.1 bzw. 84.1 gelagert, die mit einer Stützhülse 25 verbunden sind. Die Stützhülse 25 ist um die Zentralachse M herum derart angeordnet, dass sich die Zentralachse M in der Stützhülse 25 frei drehen kann. Die Stützhülse 25 ist wiederum über einen Stützsteg ortsfest mit z.B. einer der Stützwangen 5 und 4 oder mit einem der Stege 6 der Rotationsvorrichtung gekoppelt. Das untere Pendelteilrad 72 des zweiten Pendelrads 70 ist an seiner Unterseite 72.1 mit einer Pendelradhülse 75 verbunden, die um die Stützhülse 25 herum angeordnet ist, sich über das untere Teilpendelrad 82 des unteren Pendelrads 80 hinaus erstreckt und mit einer weiteren Stelleinrichtung 10.2 gekoppelt ist, die wie die Stelleinrichtung 10 oder 10.1 aufgebaut ist und auch mit der Zentralachse M gekoppelt ist. Da sich die Pendelradhülse 75 durch das untere Pendelrad 80 erstreckt, sind in ihr längliche Radialöffnungen vorgesehen, durch die sich die Achsen 83.1 bzw. 84.1 erstrecken. Die Länge der Radialöffnungen beträgt dabei mindestens die maximale Drehverstellung des unteren Pendelteilrads 72.

Das untere Pendelteilrad 72 ist an seinem Umfang mit einer Zahnung zum Eingriff in ein weiteres, angekoppeltes Zwischenzahnrad 3.3 versehen, das in ein Drehachsenzahnrad 3.2 eingreift. welches wiederum mit der Drehfläche 3 gekoppelt ist. An seiner Oberseite 72.2 hat das untere Pendelteilrad 72 eine ringförmige Vertiefung mit einem Boden, der als ringförmiger Zahnkranz 72.3 oder Zahnkranzsektor aufgebaut ist und zu der Zentralachse M hin gesehen schräg bzw. konisch ansteigt. Ein Träger 3.4 ist vorgesehen, der das Zwischenzahnrad 3.3 und das Drehachsenzahnrad 3.2 hält und an dem unteren Pendelteilrad 72 gelagert ist.

Das obere Pendelteilrad 71 des oberen Pendelrads 70 ist an seinem Umfang mit seiner Zahnung im Eingriff in das weitere, angekoppelte Zwischenzahnrad 4.3 versehen, das wiederum in das Drehachsenzahnrad 4.2 eingreift, welches mit der Drehfläche 4 gekoppelt ist. An seiner Unterseite 71.1 hat das obere Pendelteilrad 71 eine ringförmige Vertiefung mit einem Boden, der als ein ringförmiger Zahnkranz 71.3 oder Zahnkranzsektor, aufgebaut ist und in Richtung zu der Zentralachse M hin gesehen schräg bzw. konisch abfällt. Ein Träger 4.4 ist vorgesehen, der das Zwischenzahnrad 4.3 und das Drehachsenzahnrad 4.2 hält und an dem oberen Pendelteilrad 71 gelagert ist.

Die beiden Pendelteilräder 71 und 72 sind in der Vertikalen übereinander derart angeordnet, dass sich die Zahnkränze 71.3 und 72.3 ausgerichtet gegenüberstehen. Die beiden Kegelzylinderzahnräder 73 und 74 sind zwischen den beiden Pendelteilrädern 71 und 72 in den Vertiefungen angeordnet und in Eingriff mit den Zahnkränzen 71.3 und 72.3. Jedes der Kegelzylinderzahnräder 73 und 74 ist frei drehbar auf einer zugehörigen Achse 73.1 bzw. 74.1 gelagert, die auch mit der Stützhülse 25 verbunden sind.

Wird das untere Pendelteilrad 82 des unteren Pendelrads 80 von der Stelleinrichtung 10 z.B. um einen Winkel von +10 ° verdreht, führt diese Drehbewegung des unteren Pendelteilrads 82 zu einer entsprechenden Drehbewegung des Zwischenzahnrads 1.3, des Drehachsenzahnrads 1.2 und auch der Drehflächenachse 1.1 und damit auch zu einer zugehörigen Neigungsverstellung der Drehfläche 1 auf + 10 °. Dreht sich das untere Pendelteilrad 82, wird diese Drehung über die beiden Kegelzylinderzahnräder 83 und 84 auf das obere Pendelteilrad 81 des unteren Pendelrads 80 mit dem entgegengesetzten Drehsinn derart übertragen, dass sich das obere Pendelteilrad 81 um z.B. einen Winkel von -10 ° zur neutralen Stellung dreht. Die Drehbewegung des oberen Pendelteilrads 81 führt dann zu einer entsprechenden Drehbewegung des Zwischenzahnrads 2.3, des Drehachsenzahnrads 2.2 und auch der Drehflächenachse 2.1 und damit auch zu einer zugehörigen Neigungsverstellung der zweiten Drehfläche 2 auf - 10 ° gegenüber der Vertikalen oder neutralen Stellung der Drehfläche 2. Damit wird die erste Drehfläche 1 in dem ersten und zweiten Quadranten der Kreisbewegung auf + 10° eingestellt, während die gegenüberliegende, zweite Drehfläche 2 im dritten und vierten Quadranten der Kreisbewegung auf - 10 ° eingestellt wird. Die Drehflächen 1 und 2 sind, wenn sie in der neutralen Stellung sind, d.h. parallel zur Strömungsrichtung S des Fluids, mit einem Phasenversatz von 180 ° angeordnet. Weiterhin wird die erste Drehfläche 1 in dem dritten und vierten Quadranten der Kreisbewegung analog auf - 10° eingestellt, während die gegenüberliegende, zweite Drehfläche 2 nun im ersten und zweiten Quadranten der Kreisbewegung auf + 10 ° eingestellt wird. Mit Hilfe des unteren Pendelrads 80 können somit die beiden Drehflächen 1 und 2 synchron mittels der Stelleinrichtung 10 oder 10.1 gesteuert werden.

Die Funktionsweise des oberen Pendelrads 70 ist analog zu der des unteren Pendelrads 80. Das untere Pendelteilrad 72 des oberen Pendelrads 70 ist zum unteren Pendelteilrad des unteren Pendelrads 80 mit einem Phasenversatz von 90 ° angeordnet, während das obere Pendelteilrad 71 des Pendelrads 70 mit einem Phasenversatz von 180 ° zum unteren Pendelteilrad 72 angeordnet ist. Die weitere Stelleinrichtung 10.2 ist baugleich zu der Stelleinrichtung 10 bzw. 10.1 und ist mit dem unteren Pendelteilrad 72 über die Pendelhülse 75 gekoppelt. Der Phasenversatz zwischen den beiden Steuerkurven der Stelleinrichtungen 10 und 10.2 beträgt jedoch 90 ° bezüglich ihrer Anordnung an der Zentralachse M.

Wird das untere Pendelteilrad 72 des unteren Pendelrads 70 von der weiteren Stelleinrichtung 10.2 z.B. um einen Winkel von +10 ° verdreht, führt diese Drehbewegung des unteren Pendelteilrads 72 zu einer entsprechenden Drehbewegung des Zwischenzahnrads 3.3, des Drehachsenzahnrads 3.2 und auch der Drehflächenachse 3.1 und damit auch zu einer zugehörigen Neigungsverstellung der Drehfläche 3 auf + 10 ° gegenüber der neutralen Stellung. Dreht sich das untere Pendelteilrad 72, wird diese Drehung über die beiden Kegelzylinderzahnräder 73 und 74 auf das obere Pendelteilrad 71 des oberen Pendelrads 70 mit dem entgegengesetzten Drehsinn derart übertragen, dass sich das obere Pendelteilrad 71 um z.B. einen Winkel von -10 ° zur neutralen Stellung dreht. Die Drehbewegung des oberen Pendelteilrads 71 führt dann zu einer entsprechenden Drehbewegung des Zwischenzahnrads 4.3, des Drehachsenzahnrads 4.2 und auch der Drehflächenachse 4.1 und damit auch zu einer zugehörigen Neigungsverstellung der vierten Drehfläche 4 auf - 10 ° gegenüber der Vertikalen oder neutralen Stellung der Drehfläche 4. Damit wird die dritte Drehfläche 3 in dem ersten und zweiten Quadranten der Kreisbewegung auf + 10° eingestellt, während die gegenüberliegende, vierte Drehfläche 4 im dritten und vierten Quadranten der Kreisbewegung auf - 10 ° eingestellt wird. Die Drehflächen 3 und 4 sind, wenn sie in der neutralen Stellung sind, d.h. parallel zur Strömungsrichtung S des Fluids, mit einem Phasenversatz von 180 ° angeordnet. Weiterhin wird die dritte Drehfläche 3 in dem dritten und vierten Quadranten der Kreisbewegung analog auf - 10° durch die zweite Stelleinrichtung 10.2 eingestellt, während die gegenüberliegende, vierte Drehfläche 4 nun im ersten und zweiten Quadranten der Kreisbewegung auf + 10 ° eingestellt wird. Mit Hilfe des oberen Pendelrads 70 können somit die beiden Drehflächen 3 und 4 synchron mittels der Stelleinrichtung 10.2 betreffend ihrer Neigung zur Strömungsrichtung S des Fluids eingestellt oder gesteuert werden.

Durch den Phasenversatz von 90 ° der Steuerkurven der Stelleinrichtungen ist sichergestellt, dass die vier Drehflächen 1, 2, 3, 4 während ihrer Kreisbewegung um die Zentralachse M auf Neigungen zur Strömungsrichtung S des Fluids eingestellt sind, die sich addierende Drehmomente oder zumindest kein Drehmoment erzeugen, wie es in den neutralen Stellungen der Drehflächen bei 0° und 180 ° der Fall ist.

## Patentansprüche

1. Rotationsvorrichtung zur Verwendung in einem Fluid, um Energie aus der Strömungsbewegung eines Fluids zu gewinnen oder um Energie in eine Bewegung eines Fluids umzuwandeln, mit:
einer Hauptdreheinrichtung (3), die mit einer Zentralachse (M) der Rotationsvorrichtung fest verbunden ist, mindestens zwei Drehflächen (1, 2, 3, 4, 5, 6) oder Rotorblätter, die drehbar um ihre Drehflächenachsen (1.1, 2.1) mit Abstand zu der Zentralachse (M) derart mit der Hauptdreheinrichtung (3) gekoppelt sind, dass die Hauptdreheinrichtung (3) durch die Drehflächen (1, 2, 3, 4, 5, 6) eine Drehbewegung um die Zentralachse (M) ausführen kann, wobei sich die Drehflächenachsen parallel zu der Zentralachse der Hauptdreheinrichtung erstrecken,
mindestens einer Stelleinrichtung (10), die die Winkel oder Neigungen der Drehflächen (1, 2, 3, 4, 5, 6) zu einer Strömungsrichtung (S) des Fluids einstellt oder steuert, und
eine Pendelradeinrichtung, die mit der Stelleinrichtung (10) gekoppelt ist, um die Zentralachse (M) herum frei drehbar angordnet ist, mit den Drehflächen (1, 2, 3, 4, 5, 6) gekoppelt ist und seine Drehbewegung auf die Drehflächen zum Einstellen der Winkel der Drehflächen zu der Strömungsrichtung (S) des Fluids überträgt,
**dadurch gekennzeichnet,**
**dass** die Pendelradeinrichtung mindestens ein Pendelrad (9; 20) mit mindestens zwei vertikal übereinander angeordnete Pendelteilräder (9.1, 9.2, 21, 22, 23, 24) aufweist, wobei zwischen jeweils zwei benachbarten Pendelteilrädern eines Pendelrads mindestens ein Walzenrad oder Kegelzylinderrad (9.3, 9.4; 31, 32, 33, 34, 35, 36) vorgesehen ist, das frei drehbar um seine Achse (9.31, 9.41; 31.1, 32.1, 33.1, 34.1, 35.1, 36.1) herum angordnet ist, die senkrecht zu der Zentralachse (M) steht, und mit den anliegenden Pendelteilrädern derart gekoppelt ist, dass es eine Drehbewegung eines der anliegenden Pendelteilräder in eine Drehbewegung des anderen der anliegenden Pendelteilräder gegensinnig überträgt, wobei eines der Pendelteilräder von der Stelleinrichtung (10) gedreht wird, und dass jedes der Pendelteilräder mit einer der Drehflächen gekoppelt ist.

2. Rotationsvorrichtung nach Anspruch 1, **dadurch gekennzeichnet, dass** das Pendelrad (9) zwei Pendelteilräder (9.1, 9.2) und zwei Kegelzylinderräder (9.3, 9.4) hat, die zwischen den beiden Pendelteilrädern (9.1, 9.2) angeordnet sind.

3. Rotationsvorrichtung nach Anspruch 1 oder Anspruch 2, **dadurch gekennzeichnet, dass** ein unteres Pendelteilrad (9.1) an seiner Unterseite (9.11) mit der Stelleinrichtung (10) zum Übertragen ihrer Stellbewegung auf das untere Pendelteilrad gekoppelt ist,
dass das untere Pendelteilrad (9.1) an seinem Umfang mit einer Zahnung zum Eingriff in ein angekoppeltes Zwischenzahnrad (1.3) versehen ist, das in ein Drehachsenzahnrad (1.2) eingreift, und
dass das untere Pendelteilrad (9.1) an seiner Oberseite (9.12) eine ringförmig Vertiefung mit einem Boden hat, der mit einem Zahnkranz (9.13) oder Zahnkranzsektor versehen ist und der in Richtung zu der Zentralachse (M) hin gesehen schräg oder konisch ansteigt.

4. Rotationsvorrichtung nach einem der vorstehenden Ansprüche, **dadurch gekennzeichnet, dass** ein oberes Pendelteilrad (9.2) an seinem Umfang mit einer Zahnung zum Eingriff in ein weiteres, angekoppeltes Zwischenzahnrad (2.3) versehen ist, das wiederum in ein Drehachsenzahnrad (2.2) eingreift, und
dass das obere Pendelteilrad (9.2) an seiner Unterseite (9.21) eine ringförmige Vertiefung mit einem Boden hat, der mit einem Zahnkranz (9.22) oder Zahnkranzsektor versehen ist und in Richtung zu der Zentralachse (M) hin gesehen schräg bzw. konisch abfällt.

5. Rotationsvorrichtung nach einem der vorstehenden Ansprüche, **dadurch gekennzeichnet, dass** mindestens ein weiteres, mittleres Pendelteilrad (23) vorgesehen ist, das an seinem Umfang wiederum mit einer Zahnung zum Eingriff in ein angekoppeltes Zwischenzahnrad (2.3) versehen ist, das wiederum in ein Drehflächenachsenzahnrad (2.2) einer weiteren Drehfläche (2) eingreift;
dass das mittlere Pendelteilrad (23) an seiner Unterseite (23.1) eine ringförmige Vertiefung mit einem Boden hat, der mit einem Zahnkranz (23.3) oder Zahnkranzsektor versehen ist und der in Richtung zu der Zentralachse (M) hin gesehen schräg oder konisch abfällt; und
dass das mittlere Pendelteilrad (23) an seiner Oberseite (23.2) eine weitere Vertiefung mit einem Boden hat, der mit einem weiteren, ringförmig sich erstreckenden Zahnkranz (23.3) oder Zahnkranzsektor versehen ist und in Richtung zu der Zentralachse M hin gesehen schräg oder konisch ansteigt.

6. Rotationsvorrichtung nach einem der vorstehenden Ansprüche, **dadurch gekennzeichnet, dass** mindestens ein Pendelteilrad (72) eines Pendelrads (70) einer Pendelradeinrichtung mit mehreren übereinander angeordneten Pendelrädern an seiner Unterseite (72.1) mit einer langgestreckten Pendelradhülse (75) verbunden ist, die um die Zentralachse (M) herum angeordnet ist.

7. Rotationsvorrichtung nach Anspruch 6, **dadurch gekennzeichnet, dass** die Pendelradhülse (75) längliche Radialöffnungen hat, durch die sich Achsen (83.1) bzw. (81.1) von Kegelradzylinderzahnrädern (83, 84) erstrecken, und
dass eine Länge der Radialöffnungen mindestens der maximalen Drehverstellung eines benachbarten Teilpendelrads (72) entspricht.

8. Rotationsvorrichtung nach einem der vorstehenden Ansprüche, **gekennzeichnet durch** einen Neigungswinkel der Drehflächen in einem Bereich von - 25 ° bis 25 ° zur Strömungsrichtung (S) des Fluids.

9. Rotationsvorrichtung nach einem der vorstehenden Ansprüche, **dadurch gekennzeichnet, dass** eine Drehfläche über 0 °- 180 ° der Drehbewegung der Hauptdreheinrichtung um die Zentralachse (M) einen Winkel zur Strömungsrichtung (S) des Fluids hat und dass die Drehfläche über 180 ° bis 360 ° der Drehbewegung der Hauptdreheinrichtung um die Zentralachse (M) einen Winkel zur Strömungsrichtung (S) des Fluids hat, der ein umgekehrtes Vorzeichen zu dem Winkel in den 0 ° bis 180 ° hat, wobei die Winkel gleichsinnig wirkende Drehmomente bereitstellen.

10. Rotationsvorrichtung nach einem der vorstehenden Ansprüche, **dadurch gekennzeichnet, dass** die Stelleinrichtung (10) einen Steuernocken, der fest mit der Zentralachse (M) gekoppelt ist, und einen Antrieb hat, der mit dem Steuernocken und der Drehfläche oder den Drehflächen gekoppelt ist und die Bewegung des Steuernocken in eine Drehbewegung der Drehfläche oder Drehflächen zum Einstellen des Winkels der jeweiligen Drehfläche zur Strömungsrichtung (S) des Fluids umsetzt.

11. Rotationsvorrichtung nach einem der Ansprüche 1 bis 9, **dadurch gekennzeichnet, dass** die Stelleinrichtung einen elektrischen oder elektromotorischen Antrieb hat, der mit der Drehfläche oder den Drehflächen gekoppelt ist und in Abhängigkeit von der Drehposition der Hauptdreheinrichtung den Winkel der Drehfläche oder Drehflächen einstellt.

12. Rotationsvorrichtung nach einem der vorstehenden Ansprüche, **dadurch gekennzeichnet, dass** eine neutrale Stellung der Drehfläche bezüglich der Strömungsrichtung (S) des Fluids vorgesehen ist, in der die jeweilige Drehfläche parallel zur Strömungsrichtung (S) des Fluids ist und kein Drehmoment erzeugt.
